# EUROPEAN PATENT SPECIFICATION

(11) **EP 1 990 268 B1**
(45) Date of publication and mention of the grant of the patent: **02.11.2016**
(21) Application number: 08005645.0
(22) Date of filing: 26.03.2008
(51) Int. Cl.: B62M 9/12

(54) **Front derailleur for a bicycle**
Vorderradkettenschaltung für ein Fahrrad
Dérailleur avant pour bicyclette

(30) Priority: 03.05.2007 IT MI20070883
(43) Date of publication of application: 12.11.2008
(73) Proprietor: CAMPAGNOLO S.r.l., 36100 Vicenza (VI) (IT)
(72) Inventor: Valle, Maurizio, 36100 Vicenza (IT); Lazzarin, Leopoldo, 36100 Vicenza (IT)
(74) Representative: Checcacci, Giorgio

(56) References cited:
- EP-A- 1 433 696
- EP-A- 1 798 143
- DE-U1- 9 410 177
- FR-A- 2 415 037
- US-B2- 7 081 058

## Description

The present invention concerns a front derailleur for a bicycle.

As known, front derailleurs are used to move the chain during travel from a toothed wheel of the bottom bracket to another one having a different diameter to carry out gearshifting, varying the transmission ratio.

The derailleur comprises a chain guide above the chain and a chain guide positioning mechanism, normally an articulated parallelogram mechanism, which is fixed to the bicycle frame along the tube that connects the bottom bracket to the saddle (seat-tube).

The chain guide is formed from an inner plate and an outer plate facing one another and substantially parallel. The inner plate acts thrusting upon the chain to make it pass from a wheel having a small diameter to one having a larger diameter (upward gearshifting) and the outer plate acts thrusting upon the chain to make it pass from a wheel having a larger diameter to one having a smaller diameter (downward gearshifting).

A known derailleur is described in US 7,081,058 and essentially comprises a chain guide positioning mechanism that comprises an articulated quadrilateral formed from a fixed member (first side) firmly connected to a strap for connection around the seat-tube, from two connecting rods (inner connecting rod and outer connecting rod, which form other two sides of the parallelogram) and from the body of the chain guide itself (which forms the fourth side and completes the articulated parallelogram), articulated along four axes A, B, C and D, parallel to one another.

The outer connecting rod is upper hinged to the fixed member about the second axis B and extends on top beyond the second axis B with an actuation arm to the end of which the actuation cable of the derailleur is connected. The cable is laterally connected to the end of the actuation arm, so that the cable itself does not interfere with the positioning mechanism below. When the cable is pulled, the actuation arm is pulled and the outer connecting rod rotates about the second axis B. The parallelogram is thus deformed, with the chain guide that is moved towards the outside of the bicycle to carry out gearshifting.

The outer connecting rod is hinged to a top end of the fixed member and receives such an end in an opening defined by two of its flanges 106a and 106b that laterally embrace the top end of the fixed member. The top end of the fixed member and the two flanges 106a and 106b receives an articulation pin 70 along the axis B in respective aligned holes.

The inventors of the present patent application have found a drawback in such a type of derailleur. The bending moment caused by the traction of the command cable creates a non-uniform stress: when, indeed, the cable is pulled to move the chain guide, the stress induced by the cable on the end of the actuation arm is transmitted to the articulation pin close to the two flanges 106a and 106b and acts upon the ends of the pin 70; one end of the pin 70, the one facing towards the side in which the actuation arm extends, close to the flange 106b, is biased more than the other. The continuous stresses of the pin at its ends, in particular at its most biased end, can cause irregular wearing of the pin and/or of the flanges or even lead to breaking.

Document FR 2415037 discloses a front derailleur according to the preamble of claim 1.

The problem forming the basis of the present invention is that of making a derailleur that does not have the drawbacks of known derailleurs.

Therefore, the present invention concerns, in its most general terms, a derailleur according to claim 1; preferred optional characteristics are outlined in the dependent claims.

More specifically, a front derailleur for a bicycle, in accordance with the invention, comprises:
- a mobile member, provided with a chain-guide suitable for sliding engagement with a transmission chain of the bicycle and mobile between a first position and at least one second position,
- a fixed member, suitable for being fixed to a part of the bicycle frame,
- a first connecting rod (or outer connecting rod) and a second connecting rod (or inner connecting rod), hinged to the fixed member and to the mobile member according to four substantially parallel articulation axes so as to form an articulated quadrilateral, which can be deformed so as to move the chain-guide between said first and said at least one second position,
- an actuation arm of said first connecting rod, provided with a thrusting area for commanding the derailleur through application of a thrust to the actuation arm so as to deform the deformable quadrilateral,
wherein at a first of said four articulation axes between the fixed member and the first connecting rod, the fixed member comprises a first forked structure that embraces the first connecting rod, in which the first
forked structure comprises two opposite flanges,
characterized in that the second connecting rod is substantially S-shaped, between a third and a fourth of said four articulation axes, and it extends between a first plane at the third articulation axis and a second plane at the fourth articulation axis, and wherein the first and the second planes of the second connecting rod are perpendicular to the four articulation axes, are spaced apart by a predetermined distance and are laterally displaced each with respect to the corresponding flange of said opposite flanges of said fork structure.

It has been found that the provision on the fixed member of the forked structure that embraces the first connecting rod allows a better distribution of the stresses induced in the first connecting rod and on the pin by the traction of the derailleur command cable. Indeed, the stress exerted on the actuation arm of the first connecting rod during the actuation of the command cable is distributed in the central area of the pin, the ends of the pin being better supported by the fixed member. In this way, not only are the aforementioned drawbacks with reference to the prior art overcome, but it also becomes simpler to size the actuation arm, which can be narrower and longer without this jeopardising its strength. It is also possible to ensure that such an arm, like the pin, be of reduced weight, without this jeopardising its mechanical strength. Moreover, the better distribution of stresses also determines a lower deformability of the biased parts and therefore a better rotation coupling and a consequent lower wear on the pins.

Preferably, the thrusting area on the actuation arm of the first connecting rod comprises a hook for a derailleur command cable, and more preferably the derailleur comprises an elastic return member, acting on the articulated quadrilateral in the direction to push the chain-guide towards said first position, in which the thrust applied by the cable to the hook acts in the opposite direction to the return of the elastic return member. Alternatively, in a motorised derailleur (also known as an automatic or electric derailleur) the thrusting area can be a toothed sector engaged with a driving screw.

Preferably, the flanges of the first forked structure are provided with respective holes aligned along the first articulation axis and the first connecting rod comprises a hole aligned with the first articulation axis, a pin being inserted into the two holes of the first forked structure and into the hole of the first connecting rod. Alternatively, it is possible for the pin to be formed in one piece with the connecting rod and for the flanges to consequently be in two pieces, so as to be able to be mounted on the pin; or else, it is possible for the pin -possibly in two pieces - to be formed in one piece with the flanges and for the connecting rod to consequently be made in two pieces, so as to be able to be mounted on the pin.

Preferably, the first connecting rod comprises a main arm extending between the first articulation axis and a second of said four articulation axes, between the first connecting rod and the mobile member, and the main arm and the actuation arm substantially extend in the same plane perpendicular to the four articulation axes. The expression "substantially extend in the same plane" must not be taken here in the literal sense that the first connecting rod has substantially zero thickness in the direction of the articulation axes, but rather in the sense that the first connecting rod extends substantially to the same extent on one side as on the other, in the direction of the articulation axes, i.e. that it does not have canti-levered portions. In this way, the first connecting rod has a very regular and uniform configuration, such as to regularly and uniformly transmit to the pin the stresses induced by the command cable.

Preferably, at a third of said four articulation axes between the fixed member and the second connecting rod, the fixed member comprises a second forked structure that embraces the second connecting rod, the second forked structure comprises two opposite flanges; more preferably, the flanges of the second forked structure are provided with respective holes aligned along the third articulation axis, the second connecting rod comprises a hole aligned with the third articulation axis, and a pin is inserted into the two holes of the second forked structure and into the hole of the second connecting rod. Alternatively, it is possible for the pin to be formed in one piece with the connecting rod and for the flanges to consequently be in two pieces, so as to be able to be mounted on the pin; or else, it is possible for the pin - possibly in two pieces - to be formed in one piece with the flanges and for the connecting rod to consequently be made in two pieces, so as to be able to be mounted on the pin.

Alternatively, at a third of said four articulation axes between the fixed member and the second connecting rod, the fixed member comprises a canti-levered pin, and the second connecting rod comprises a hole aligned with the third articulation axis, inserted on the canti-levered pin of the fixed member.

Preferably, at a fourth of said four articulation axes between the second connecting rod and the mobile member, the mobile member comprises two opposite flanges perforated along the fourth articulation axis, in which the second connecting rod comprises a hole aligned with the fourth articulation axis, and in which a pin is inserted into the flanges and into the hole of the second connecting rod and, more preferably, the elastic return member is a helical spring, mounted on the pin and provided with two ends, one engaged with an abutment tooth formed on the second connecting rod, the other engaged with an abutment portion formed on the mobile member.

Preferably, the fixed member comprises a cylindrical portion for a braze-on attachment to the bicycle frame. Alternatively, the fixed member comprises two semi-circular portions articulated together and a locking element for locking such semi-circular portions about the part of bicycle frame; in this case, more preferably, the fixed member is formed in one piece with one of the two articulated semi-circular portions.

Further characteristics and advantages of a derailleur according to the invention shall become clearer from the following description of some preferred embodiments thereof, made with reference to the attached drawings. In such drawings:
- figure 1 is a perspective view of a derailleur according to a first embodiment of the invention;
- figure 2 is a view of the derailleur of figure 1, taken from direction II;
- figure 3 is an enlarged perspective view of the fixed member of the derailleur of figure 1;
- figure 4 is a view of the fixed member of figure 3, taken from direction IV;
- figure 5 is a view from above of a derailleur according to a second embodiment of the invention, with parts partially separated;
- figure 6 is a view of the fixed member of the derailleur of figure 5;
- figure 7 is a view of a variant of a fixed member, for the derailleur of figure 5;
- figure 8 is a perspective view of a derailleur according to a third embodiment of the invention;
- figure 9 is an enlarged perspective view of the fixed member of the derailleur of figure 8.

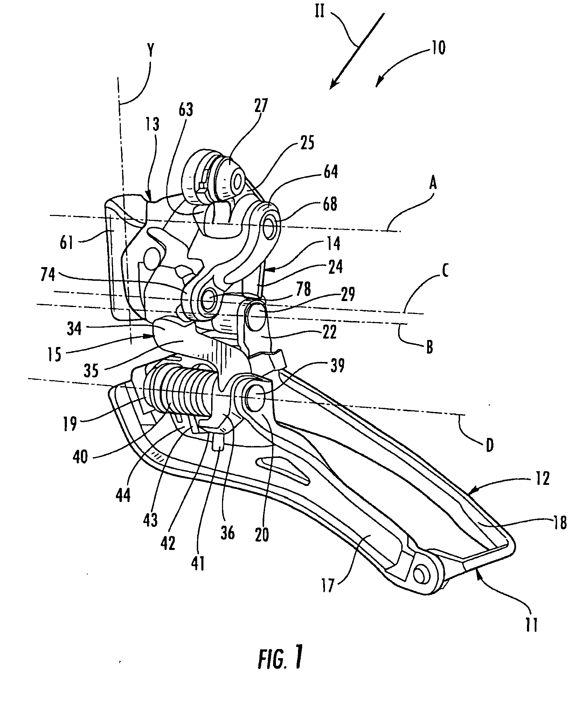

Figures 1 to 4 show a derailleur 10, in particular a front derailleur suitable for being mounted on a bicycle.

The derailleur 10 comprises a chain guide 11, which is suitable for sliding engagement with a transmission chain of the bicycle to move the chain from a first position and at least one second position, corresponding to distinct transmission ratios; neither the chain nor other parts of the bicycle are shown in the drawings, both for the sake of simplicity of illustration, and because they are *per se* known and do not form part of the invention.

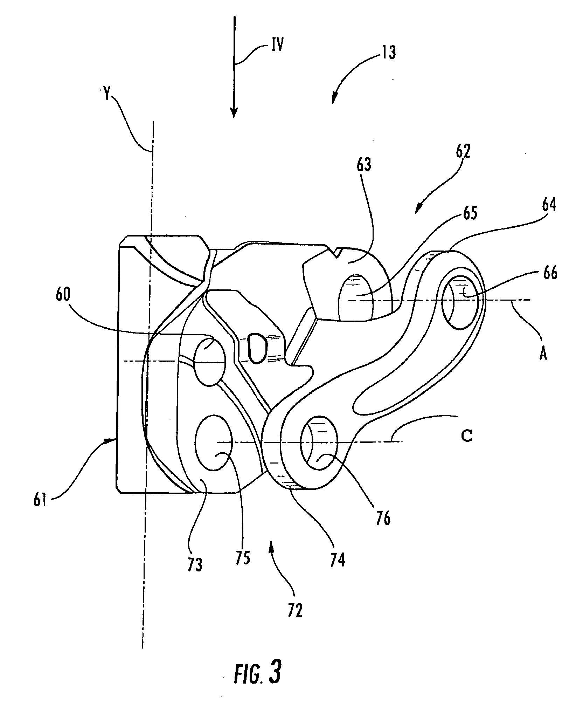

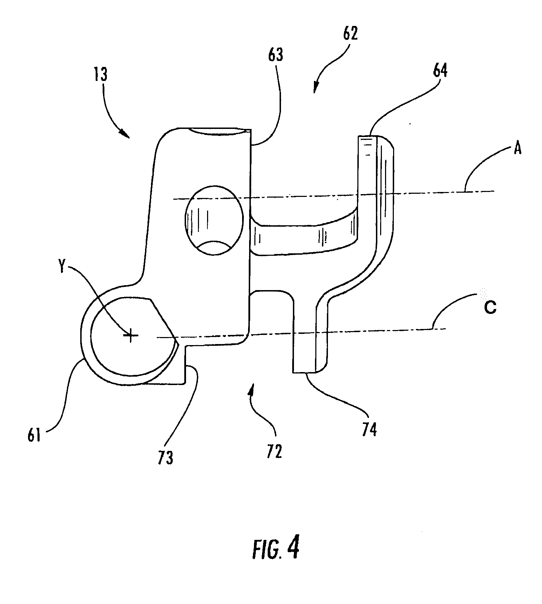

The chain guide 11 forms part of a mobile member 12 of an actuation mechanism that also includes a fixed member 13 (more clearly visible in figures 3 and 4) and two connecting rods, a first connecting rod 14 (or outer connecting rod) and a second connecting rod 15 (or inner connecting rod); the indications "inner" and "outer", just like "lower" and "upper" that shall be used hereafter, refer to the position taken up with respect to the mounting position of the derailleur in the bicycle.

The fixed member 13, the mobile member 12 and the two connecting rods 14 and 15 are articulated together along four articulation axes A, B, C, D that are parallel to one another, so that the actuation mechanism is an articulated quadrilateral, or rather an articulated parallelogram. More precisely, the fixed member 13 and the first connecting rod 14 are articulated together according to the first axis A; the first connecting rod 14 and the mobile member 12 are articulated together according to the second axis B; the fixed member 13 and the second connecting rod 15 are articulated together according to the third axis C; the second connecting rod 15 and the mobile member 12 are articulated together according to the fourth axis D.

The mobile member 12 comprises an inner plate 17 facing an outer plate 18, which form the chain guide 11, and it is provided with lower flanges 19, 20 perforated along the axis D for connection to the second connecting rod 15 and with upper flanges 21, 22 for connection to the first connecting rod 14.

The first connecting rod 14 comprises a main arm 24, extending between the axes A and B, and an actuation arm 25, at the end of which a thrusting area is provided, in particular a hook 27 for a derailleur command cable (not shown). The first connecting rod 14 is configured so that the main arm 24 and the actuation arm 25 substantially extends in the same plane perpendicular to the four articulation axes A, B, C, D, i.e. the first connecting rod 14 extends substantially to the same extent on one side and the other, in the direction of the articulation axes A, B, C, D, without having canti-levered portions; in particular, the position of the hook 27 is not canti-levered but rather centred.

At the axis B, a pin 29 rotatably connects the flanges 21 and 22 to a hole 28 made in the connecting rod 14.

The second connecting rod 15 is substantially S-shaped and has an upper portion 34 articulated to the fixed member 13 about the third axis C, an intermediate portion 35 and a lower portion 36 articulated to the mobile member 12 about the fourth axis D; with respect to the common direction of the axes A, B, C, D, the two portions 34 and 36 extend between distinct planes M
and N, spaced apart by a throat depth k.

At the axis D, a pin 39 rotatably connects the flanges 19 and 20 to a hole made in the lower portion 36 of the connecting rod 15. About the axis D, an elastic return member, more precisely a preloaded helical spring 40, is arranged; this spring 40 is provided with an end 41 in abutment on a tooth 42 of the lower portion 36 of the second connecting rod 15 and with an end 43 in abutment on a portion 44 of the mobile member 12. The spring 40 keeps the articulated parallelogram mechanism pushing towards a rest position, which is normally the position in which the chain guide 11 is located towards the bicycle, in mounted configuration; such a position is that in which the axis A is farthest from the axis D.

A pair of screws 50 and 51, adjustably mounted in respective threaded holes on the fixed member 13, cooperate with the upper portion 34 of the second connecting rod 15 to define the extreme rotation positions of the connecting rod 15 itself and therefore the extreme deformation positions of the articulated parallelogram and of its parts, including in particular the position of the chain guide 11. These extreme positions are adjustable through screwing/unscrewing of the screws 50 and 51.

The fixed member 13 (which can be seen more clearly in figs. 3 and 4, separate from the rest of the mechanism) comprises a cylindrical surface 61 for attachment to a portion of the seat-tube of the bicycle frame of a shape matching the cylindrical surface 61 (braze-on attachment); the cylindrical surface 61 extends around a central axis Y.

The fixed member 13 then comprises, at the first axis A, a first forked structure 62 that embraces the first connecting rod 14. The first forked structure 62 is formed from a first flange 63 facing a second flange 64, provided with respective holes 65 and 66 aligned along the axis A; a pin 68 is inserted in the holes 65 and 66 and in a hole 69 aligned with them formed in the first connecting rod 14, so as to provide the articulated coupling between the fixed member 13 and the connecting rod 14.

The fixed member 13 also comprises, at the third axis C, a second forked structure 72 that embraces the second connecting rod 15. The second forked structure 72 is formed from a first flange 73 facing a second flange 74, provided with respective holes 75 and 76 aligned along the axis C; a pin 78 is inserted in the holes 75 and 76 and in a hole aligned with them formed in the second connecting rod 15, in particular in its upper portion 34, so as to provide the articulated coupling between the fixed member 13 and the connecting rod 14.

In the fixed member 13, a through hole 60 facing into the cylindrical surface 61 is formed, to receive an attachment screw (not shown) for the connection to the seat of the seat-tube.

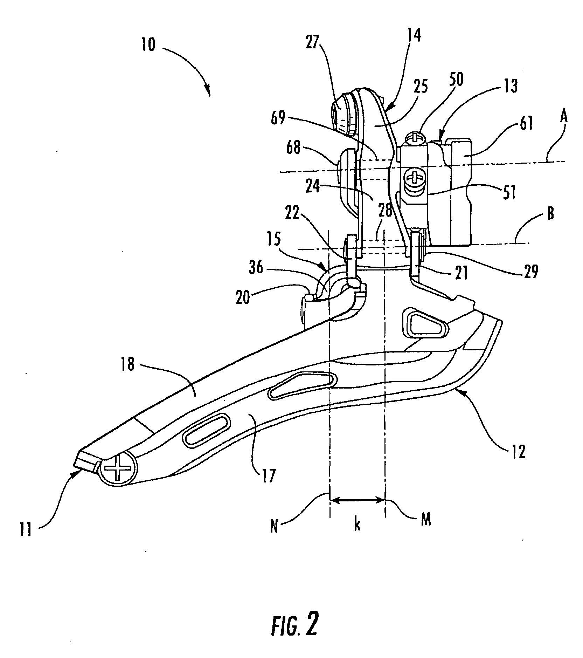

As can be seen more clearly in figure 2, the first forked structure 62 with its flanges 63 and 64 laterally embraces the first connecting rod 14 and supports the articulation pin 68 at the ends thereof. When a traction force is applied to the hook 27 of the actuation arm 25 by the derailleur command cable, the stress is transmitted from the actuation arm 25 into the articulation area at the pin 68. The stress is distributed in the central area of the pin 68, located between the two flanges 63 and 64, and not mainly at one end, like in derailleurs of the prior art.

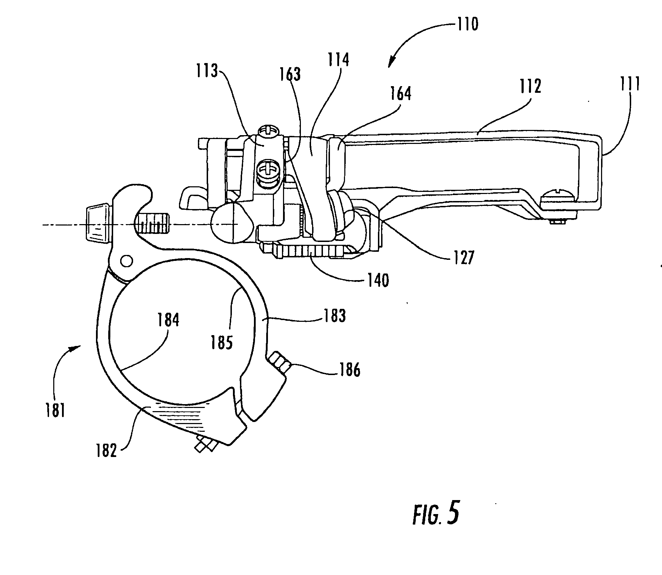

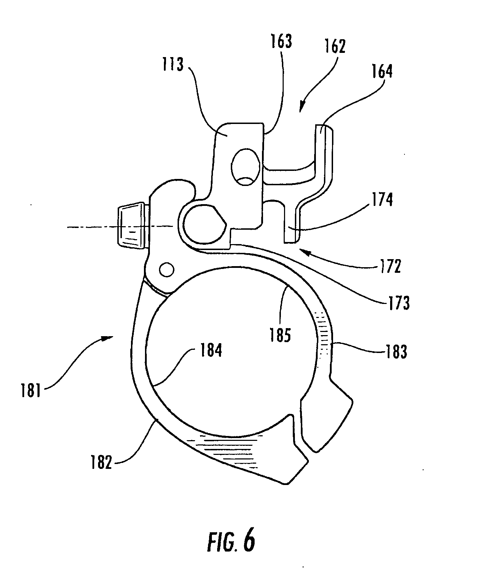

Figures 5 and 6 show a view from above of a variant of a derailleur 110, which differs from the derailleur 10 described above for the method of connection to the seat-tube, through a clamp attachment instead of in a seat with cylindrical surface.

The derailleur 110 is totally similar to the derailleur 10 and shall not be described in detail hereafter apart from what is different therefrom. In figures 5 and 6, the parts of the derailleur 110 that correspond to the derailleur 10 are indicated with the same reference numerals increased by 100.

In the derailleur 110, a clamp adapter element 181 is applied (in particular screwed) to the fixed member 113 to connect the derailleur 110 to the seat-tube of the bicycle. For this purpose, the clamp adapter element 181 (of the *per se* known type) comprises two semi-circular portions 182, 183, articulated together, to allow them to open out, with respective circular surfaces 184, 185 that are clamped on the frame by a bolt 186 when the derailleur 110 is in mounted configuration.

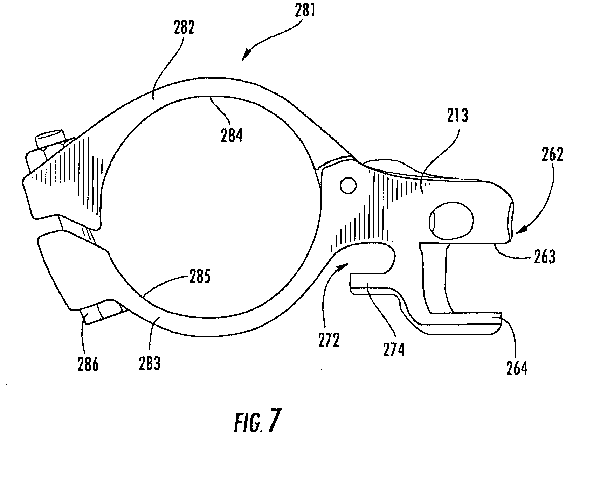

Fig. 7 shows a variant 213 of the fixed member of the derailleur that differs from the fixed member 113 in that it comprises two semi-circular portions 282, 283, articulated together, to allow them to open out, with respective circular surfaces 284, 285 that are clamped on the frame by a bolt 286 when the derailleur is in mounted configuration. The fixed member 213 is formed in one piece with the semi-circular portion 283.

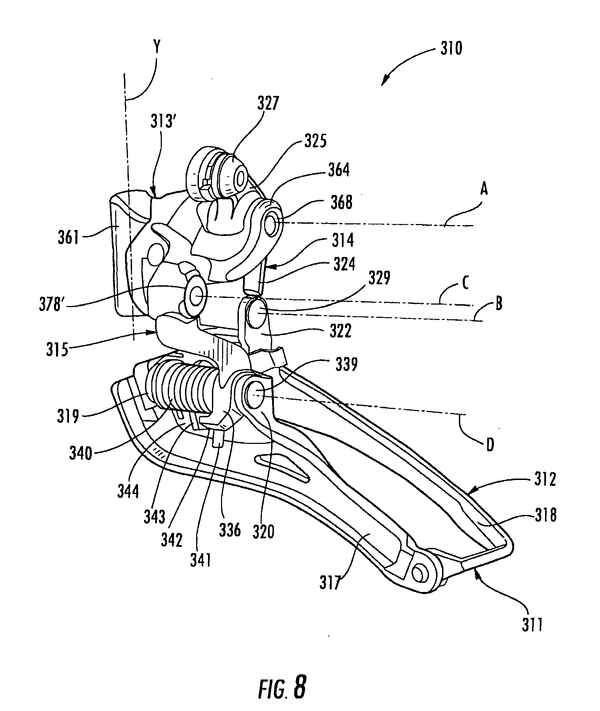

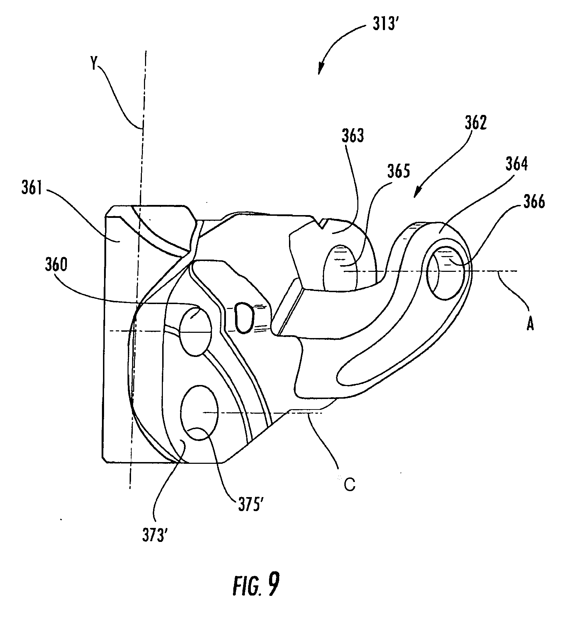

Figure 8 shows a perspective view of another variant of the derailleur 310, which differs from the derailleur 10 described above for the different embodiment of the fixed member 313', shown in greater detail in figure 9.

The derailleur 310 is totally similar to the derailleur 10 and shall not be described in detail hereafter apart from what is different therefrom. In figures 8 and 9, the parts of the derailleur 310 that correspond to the derailleur 10 are indicated with the same reference numerals increased by 300.

The fixed member 313' is similar to the fixed member 13, except for in the area of the articulation axis C. In this area, indeed, the fixed member 313' comprises a flange 373' provided with a hole 375' for receiving a pin 378' arranged canti-levered with respect to the flange 373'. The fixed member 313' does not have the flange facing the flange 373' and the second connecting rod 315 is connected to the fixed member 313' canti-levered, on the pin 378', as can be seen in fig. 8.

Of course, other variants are possible, whilst still remaining covered by the present invention as defined by the following claims. For example, it shall be possible to make a derailleur similar to the derailleur 310, but suitable for connection to the bicycle like the derailleur 110, possibly with a fixed group like the group 213.

Furthermore, in the couplings between a forked structure and a connecting rod, it is possible for the pin to be formed in one piece with the connecting rod and for the flanges of the forked structure to consequently be in two pieces, so as to be able to be mounted on the pin; or else, it is also possible for the pin - possibly in two pieces - to be formed in one piece with the flanges and for the connecting rod to consequently be made in two pieces, so as to be able to be mounted on the pin.

Furthermore, alternatively, in the case of a motorised derailleur (also known as an automatic or electric derailleur) the thrusting area of the actuation arm of the first connecting rod can consist of a toothed sector engaged with a driving screw.

## Claims

1. Front derailleur for a bicycle, comprising:
- a mobile member (12, 212, 312), provided with a chain-guide (11, 111, 211) suitable for sliding engagement with a transmission chain of the bicycle and mobile between a first position and at least one second position,
- a fixed member (13, 113, 213, 313'), suitable for being fixed to a part of the bicycle frame,
- a first connecting rod (14, 114, 314) and a second connecting rod (15, 115, 315), hinged to the fixed member (13, 113, 213, 313') and to the mobile member (12, 212, 312) according to four substantially parallel articulation axes (A; B; C; D) so as to form an articulated quadrilateral, able to be deformed so as to move the chain-guide (11, 111, 211) between said first and said at least one second position,
- an actuation arm (25, 325) of said first connecting rod (14, 114, 314), provided with a thrusting area (27, 327) for commanding the derailleur (10, 110, 310) through application of a thrust to the actuation arm (25, 325) so as to deform the deformable quadrilateral,
wherein at a first (A) of said four articulation axes between the fixed member (13, 113, 213, 313') and the first connecting rod (14, 114, 314), the fixed member (13, 113, 213, 313') comprises a first forked structure (62, 362) that embraces the first connecting rod (14, 114, 314), and wherein the first forked structure (62, 362) comprises two opposite flanges (63, 64), **characterized in that** the second connecting rod (15, 315) is substantially S-shaped, between a third (C) and a fourth (D) of said four articulation axes, and it extends between a first plane (M) at the third articulation axis (C) and a second plane (N) at the fourth articulation axis (D), and wherein the first and the second planes (M, N) of the second connecting rod (15, 315) are perpendicular to the four articulation axes (A, B, C, D), are spaced apart by a predetermined distance (k) and are laterally displaced each with respect to the corresponding flange of said opposite flanges (63, 64) of said first fork structure.

2. Derailleur according to claim 1, wherein the thrusting area on the actuation arm (25, 325) of the first connecting rod (14, 114, 314) comprises a hook (27, 327) for a derailleur command cable.

3. Derailleur according to claim 1, wherein the thrusting area on the actuation arm of the first connecting rod comprises a toothed sector engaged with a driving screw.

4. Derailleur according to claim 2, comprising an elastic return member (40, 340), acting on the articulated quadrilateral in the direction so as to push the chain-guide (11, 111, 211) towards said first position, wherein the thrust applied by the cable to the hook (27, 327) acts in the opposite direction to the return of the elastic return member (40, 340).

5. Derailleur according to any one of claims 1 to 4, wherein the flanges (63, 64) of the first forked structure (62, 362) are provided with respective holes (65, 66) aligned along the first articulation axis (A) and the first connecting rod (14, 114, 314) comprises a hole (69) aligned with the first articulation axis (A), a pin (68, 368) being inserted into the two holes (65, 66) of the first forked structure (62, 362) and into the hole (69) of the first connecting rod (14, 114, 314).

6. Derailleur according to any one of claims 1 to 5, wherein the first connecting rod (14, 114, 314) comprises a main arm (24, 324) extending between the first articulation axis (A) and a second (B) of said four articulation axes, between the first connecting rod (14, 114, 314) and the mobile member (12, 212, 312), and wherein the main arm (24, 324) and the actuation arm (25, 325) substantially extend in the same plane perpendicular to the four articulation axes (A, B, C, D).

7. Derailleur according to any one of claims 1 to 6, wherein, at a third (C) of said four articulation axes between the fixed member (13) and the second connecting rod (15), the fixed member (13) comprises a second forked structure (72) that embraces the second connecting rod (15), wherein the second forked structure (72) comprises two opposite flanges (73, 74).

8. Derailleur according to claim 7, wherein the flanges (73, 74) of the second forked structure (72, 372) are provided with respective holes (75, 76) aligned along the third articulation axis (C), wherein the second connecting rod (15) comprises a hole aligned with the third articulation axis (C), and wherein a pin (78) is inserted into the two holes (75, 76) of the second forked structure (72) and into the hole of the second connecting rod (15).

9. Derailleur according to any one of claims 1 to 6, wherein, at a third (C) of said four articulation axes between the fixed member (313') and the second connecting rod (315), the fixed member (313') comprises a cantilevered pin (378'), and wherein the second connecting rod (315) comprises a hole aligned with the third articulation axis (C), inserted onto the cantilevered pin (378') of the fixed member (313').

10. Derailleur according to any one of claims 1 to 9, wherein, at a fourth (D) of said four articulation axes between the second connecting rod (15, 115, 315) and the mobile member (12, 112, 312), the mobile member (12, 112, 312) comprises two opposite flanges (19, 20, 319, 320) perforated along the fourth articulation axis (D), wherein the second connecting rod (15, 115, 315) comprises a hole aligned with the fourth articulation axis (D), and wherein a pin (39, 339) is inserted into the flanges and into the hole of the second connecting rod (15, 15, 315).

11. Derailleur according to claims 4 and 10, wherein the elastic return member is a helical spring (40, 340), mounted on the pin (39, 339) and provided with two ends, one (41, 341) engaged with an abutment tooth (42, 342) formed on the second connecting rod (15, 315), the other (43, 343) engaged with an abutment portion (44, 344) formed on the mobile member (12, 312).

12. Derailleur according to any one of claims 1 to 11, wherein the fixed member (13, 313) comprises a cylindrical portion for a braze-on attachment (61, 361) to the bicycle frame.

13. Derailleur according to any one of claims 1 to 11, wherein the fixed member (213) comprises two semi-circular portions (282, 283) articulated together and a clamping element (286) for clamping such semi-circular portions (282, 283) about the part of bicycle frame.

14. Derailleur according to claim 13, wherein the fixed member (213) is formed in one piece with one (283) of the two articulated semi-circular portions.

## Patentansprüche

1. Vorderradkettenschaltung für ein Fahrrad, umfassend:
ein bewegliches Element (12, 212, 312), ausgestattet mit einer Kettenführung (11, 111, 211), geeignet zum Schiebeeingriff mit einer Kraftübertragungskette des Fahrrades und beweglich zwischen einer ersten Position und mindestens einer zweiten Position,
ein feststehendes Element (13, 113, 213, 313'), das geeignet ist, um an einem Teil des Fahrradrahmens befestigt zu werden,
einen ersten Verbindungsstab (14, 114, 314) und einen zweiten Verbindungsstab (15, 115, 315), drehbar befestigt an dem feststehenden Element (13, 113, 213, 313') und an dem beweglichen Element (12, 212, 312) entsprechend vier im Wesentlichen parallelen Gelenkachsen (A; B; C; D), so dass ein gelenkiges Viereck gebildet wird, das so verformt werden kann, um die Kettenführung (11, 111, 211) zwischen der ersten und der zumindest einen zweiten Position zu bewegen;
einen Betätigungsarm (25, 325) des ersten Verbindungsstabs (14, 114, 314), der mit einer Schubfläche (27, 327) vorgesehen ist zum Führen der Kettenschaltung (10, 110, 310) durch Anwendung eines Druckes auf den Betätigungsarm (25, 325), so dass das verformbare Viereck deformiert wird,
wobei an einer ersten (A) der vier Gelenkachsen zwischen dem feststehenden Element (13, 113, 213, 313') und dem ersten Verbindungsstab (14, 114, 314) das feststehende Element (13, 113, 213, 313') einen ersten gabelförmigen Aufbau (62, 362) aufweist, der den ersten Verbindungsstab (14, 114, 314) umschließt, und wobei der erste gabelförmige Aufbau (62, 362) zwei gegenüberliegende Flansche (63, 64) umfasst, **dadurch gekennzeichnet, dass** der zweite Verbindungsstab (15, 315) im Wesentlichen S-förmig zwischen einer dritten (C) und einer vierten (D) der vier Gelenkachsen ist und sich zwischen einer ersten Ebene (M) auf der dritten Gelenkachse (C) und einer zweiten Ebene (N) auf der vierten Gelenkachse (D) erstreckt, und wobei die erste und die zweite Ebene (M, N) des zweiten Verbindungsstabs (15, 315) senkrecht zu den vier Gelenkachsen (A, B, C, D) liegen und im Abstand durch eine vorgegebene Entfernung (k) angeordnet und jeweils seitlich bezüglich des entsprechenden Flansches der gegenüberliegenden Flansche (63, 64) des ersten Gabelaufbaus seitlich verschoben sind.

2. Kettenschaltung nach Anspruch 1, wobei die Schubfläche auf dem Betätigungsarm (25, 325) des ersten Verbindungsstabs (14, 114, 314) einen Haken (27, 327) für ein Kettenschaltungsbedienungsseil umfasst.

3. Kettenschaltung nach Anspruch 1, wobei der Schiebebereich auf dem Betätigungsarm des ersten Verbindungsstabs einen verzahnten Sektor aufweist, der mit einer Antriebsschraube in Eingriff gebracht wird.

4. Kettenschaltung nach Anspruch 2, umfassend ein elastisches Rückstellelement (40, 340), welches auf das gelenkige Viereck in die Richtung wirkt, um die Kettenführung (11, 111, 211) in Richtung der ersten Position zu drücken, wobei der durch das Seil auf den Haken (27, 327) aufgebrachte Druck in die entgegengesetzte Richtung zur Rückführung des elastischen Rückstellelements (40, 340) wirkt.

5. Kettenschaltung nach einem der Ansprüche 1 bis 4, wobei die Flansche (63, 64) des ersten gabelförmigen Aufbaus (62, 362) mit jeweiligen Löchern (65, 66) versehen sind, die längs der ersten Gelenkachse (A) ausgerichtet sind, und der erste Verbindungsstab (14, 114, 314) ein Loch (69), das längs der ersten Gelenkachse (A) ausgerichtet ist, einen Stift (68, 368), der in die zwei Löcher (65, 66) des ersten gabelförmigen Aufbaus (62, 362) und in das Loch (69) des ersten Verbindungsstabs (14, 114, 314) eingesetzt wird, umfasst.

6. Kettenschaltung nach einem der Ansprüche 1 bis 5, wobei der erste Verbindungsstab (14, 114, 314) einen Hauptarm (24, 324) umfasst, der sich zwischen der ersten Gelenkachse (A) und einer zweiten (B) der vier Gelenkachsen zwischen dem ersten Verbindungsstab (14, 114, 314) und dem beweglichen Element (12, 212, 312) erstreckt, und wobei sich der Hauptarm (24, 324) und der Betätigungsarm (25, 325) im Wesentlichen in der gleichen Ebene senkrecht zu den vier Gelenkachsen (A, B, C, D) erstrecken.

7. Kettenschaltung nach einem der Ansprüche 1 bis 6, wobei auf einer dritten (C) der vier Gelenkachsen zwischen dem feststehenden Element (13) und dem zweiten Verbindungsstab (15) das feststehende Element (13) einen zweiten gabelförmigen Aufbau (72) umfasst, welcher den zweiten Verbindungsstab (15) umschließt, wobei der zweite gabelförmige Aufbau (72) zwei gegenüberliegende Flansche (73, 74) umfasst.

8. Kettenschaltung nach Anspruch 7, wobei die Flansche (73, 74) des zweiten gabelförmigen Aufbaus (72, 372) mit entsprechenden Löchern (75, 76) versehen sind, die längs der dritten Gelenkachse (C) ausgerichtet sind, wobei der zweite Verbindungsstab (15) ein Loch aufweist, das mit der dritten Gelenkachse (C) ausgerichtet ist, und wobei ein Stift (78) in die beiden Löcher (75, 76) des zweiten gabelförmigen Aufbaus (72) und in das Loch des zweiten Verbindungsstabs (15) eingefügt wird.

9. Kettenschaltung nach einem der Ansprüche 1 bis 6, wobei auf einer dritten (C) der vier Gelenkachsen, zwischen dem feststehenden Element (313') und dem zweiten Verbindungsstab (315), das feststehende Element (313') einen einseitig eingespannten Stift (378') aufweist, und wobei der zweite Verbindungsstab (315) ein Loch aufweist, das mit der dritten Gelenkachse (C), aufgesetzt auf den einseitig eingespannten Stift (378') des feststehenden Elements (313'), ausgerichtet ist.

10. Kettenschaltung nach einem der Ansprüche 1 bis 9, wobei auf einer vierten (D) der vier Gelenkachsen zwischen dem zweiten Verbindungsstab (15, 115, 315) und dem beweglichen Element (12, 112, 312) das bewegliche Element (12, 112, 312) zwei gegenüberliegende Flansche (19, 20, 319, 320) umfasst, die längs der vierten Gelenkachse (D) durchbrochen sind, wobei der zweite Verbindungsstab (15, 115, 315) ein Loch umfasst, das längs der vierten Gelenkachse (D) ausgerichtet ist, und wobei ein Stift (39, 339) in die Flansche und in das Loch des zweiten Verbindungsstabs (15, 115, 315) eingefügt wird.

11. Kettenschaltung nach den Ansprüchen 4 und 10, wobei das elastische Rückstellelement eine Schraubenfeder (40, 340) ist, die auf dem Stift (39, 339) angebracht und mit zwei Enden versehen ist, wobei das eine (41, 341) mit einer auf dem zweiten Verbindungsstab (15, 315) ausgebildeten Anschlagzacke (42, 342) in Eingriff gebracht ist und das andere (43, 343) mit einem auf dem beweglichen Element (12, 312) ausgebildeten Anschlagabschnitt (44, 344) in Eingriff gebracht ist.

12. Kettenschaltung, nach einem der Ansprüche 1 bis 11, wobei das feststehende Element (13, 313) einen zylindrischen Teil für eine Anlötverbindung (61, 361) an dem Fahrradrahmen umfasst.

13. Kettenschaltung, nach einem der Ansprüche 1 bis 11, wobei das feststehende Element (213) zwei halbrunde Teile (282, 283), die gelenkig miteinander befestigt sind, und ein Klemmelement (286) zum Festklemmen dieser halbrunden Teile (282, 283) um den Fahrradrahmenteil aufweist.

14. Kettenschaltung nach Anspruch 13, wobei das feststehende Element (213) in einem Stück mit einem (283) der zwei gelenkig befestigten, halbrunden Teile ausbildet ist.

## Revendications

1. Dérailleur avant pour une bicyclette, comprenant :
- un élément mobile (12, 212, 312), doté d'un guide-chaine (11, 111, 211) approprié pour un engagement coulissant avec une chaine de transmission de la bicyclette et mobile entre une première position et au moins une deuxième position,
- un élément fixe (13, 113, 213, 313'), rapproprié pour être fixé à une partie du cadre de bicyclette,
- une première tige de connexion (14, 114, 314) et une deuxième tige de connexion (15, 115, 315), articulées sur l'élément fixe (13, 113, 213, 313') et sur l'élément mobile (12, 212, 312) selon quatre axes d'articulation substantiellement parallèles (A ; B ; C ; D) de manière à former un quadrilatère articulé, capable d'être déformé de manière à déplacer le guide-chaîne (11, 111, 211) entre ladite première position et ladite au moins une deuxième position,
- un bras d'actionnement (25, 325) de ladite première tige de connexion (14, 114, 314), doté d'une zone de poussée (27, 327) destinée à commander le dérailleur (10, 110, 310) par l'application d'une poussée sur le bras d'actionnement (25, 325) de manière à déformer le quadrilatère déformable,
dans lequel au niveau d'un premier (A) desdits quatre axes d'articulation entre l'élément fixe (13, 113, 213, 313') et la première tige de connexion (14, 114, 314), l'élément fixe (13, 113, 213, 313') comprend une première structure de fourche (62, 362) qui entoure la première tige de connexion (14, 114, 314), et dans lequel la première structure de fourche (62, 362) comprend deux bords opposés (63, 64), **caractérisé en ce que** la deuxième tige de connexion (15, 315) a substantiellement une forme de S, entre un troisième (C) et un quatrième (D) desdits quatre axes d'articulation, et elle s'étend entre un premier plan (M) au niveau du troisième axe d'articulation (C) et un deuxième plan (N) au niveau du quatrième axe d'articulation (D), et dans lequel les premier et deuxième plans (M, N) de la deuxième tige de connexion (15, 315) sont perpendiculaires aux quatre axes d'articulation (A, B, C, D), sont écartés par une distance prédéterminée (k) et sont déplacés latéralement par rapport au bord correspondant desdits bords opposés (63, 64) de ladite première structure de fourche.

2. Dérailleur selon la revendication 1, dans lequel la surface de poussée sur le bras d'actionnement (25, 325) de la première tige de connexion (14, 114, 314) comprend un crochet (27, 327) pour un câble de commande de dérailleur.

3. Dérailleur selon la revendication 1, dans lequel la zone de poussée sur le bras d'actionnement de la première tige de connexion comprend un secteur denté engagé avec une vis d'entraînement.

4. Dérailleur selon la revendication 2, comprenant un élément de rappel élastique (40, 340), agissant sur le quadrilatère articulé dans une direction de manière à pousser le guide-chaîne (11, 111, 211) en direction de ladite première position, dans lequel la poussée appliquée par le câble sur le crochet (27, 327) agit dans la direction opposée au rappel de l'élément de rappel élastique (40, 340).

5. Dérailleur selon l'une quelconque des revendications 1 à 4, dans lequel les bords (63, 64) de la première structure de fourche (62, 362) sont dotés de trous respectifs (65, 66) alignés le long du premier axe d'articulation (A) et la première tige de connexion (14, 114, 314) comprend un trou (69) aligné avec le premier axe d'articulation (A), une goupille (68, 368) étant insérée dans les deux trous (65, 66) de la première structure de fourche (62, 362) et dans le trou (69) de la première tige de connexion (14, 114, 314).

6. Dérailleur selon l'une quelconque des revendications 1 à 5, dans lequel la première tige de connexion (14, 114, 314) comprend un bras principal (24, 324) s'étendant entre le premier axe d'articulation (A) et un deuxième (B) desdits quatre axes d'articulation, entre la première tige de connexion (14, 114, 314) et l'élément mobile (12, 212, 312), et dans lequel le bras principal (24, 324) et le bras d'actionnement (25, 325) s'étendent substantiellement dans le même plan perpendiculaire aux quatre axes d'articulation (A, B, C, D).

7. Dérailleur selon l'une quelconque des revendications 1 à 6, dans lequel, au niveau d'un troisième (C) desdits quatre axes d'articulation entre l'élément fixe (13) et la deuxième tige de connexion (15), l'élément fixe (13) comprend une deuxième structure de fourche (72) qui entoure la deuxième tige de connexion (15), dans lequel la deuxième structure de fourche (72) comprend deux bords opposés (73, 74).

8. Dérailleur selon la revendication 7, dans lequel les bords (73, 74) de la deuxième structure de fourche (72, 372) sont dotés de trous respectifs (75, 76) alignés le long du troisième axe d'articulation (C), dans lequel la deuxième tige de connexion (15) comprend un trou aligné avec le troisième axe d'articulation (C), et dans lequel une goupille (78) est insérée dans les deux trous (75, 76) de la deuxième structure de fourche (72) et dans le trou de la deuxième tige de connexion (15).

9. Dérailleur selon l'une quelconque des revendications 1 à 6, dans lequel, au niveau d'un troisième (C) desdits quatre axes d'articulation entre l'élément fixe (313') et la deuxième tige de connexion (315), l'élément fixe (313') comprend une goupille en porte-à-faux (378'), et dans lequel la deuxième tige de connexion (315) comprend un trou aligné avec le troisième axe d'articulation (C), inséré sur la goupille en porte-à-faux (378') de l'élément fixe (313').

10. Dérailleur selon l'une quelconque des revendications 1 à 9, dans lequel au niveau d'un quatrième (D) desdits quatre axes d'articulation entre la deuxième tige de connexion (15, 115, 315) et l'élément mobile (12, 112, 312), l'élément mobile (12, 112, 312) comprend deux bords opposés (19, 20, 319, 320) perforés le long du quatrième axe d'articulation (D), dans lequel la deuxième tige de connexion (15, 115, 315) comprend un trou aligné avec le quatrième axe d'articulation (D), et dans lequel une goupille (39, 339) est insérée dans les bords et dans le trou de la deuxième tige de connexion (15, 115, 315).

11. Dérailleur selon les revendications 4 et 10, dans lequel l'élément de rappel élastique est un ressort hélicoïdal (40, 340), monté sur la goupille (39, 339) et doté de deux extrémités, une première (41, 341) engagée avec une dent de butée (42, 342) formée sur la deuxième tige de connexion (15, 315), l'autre (43, 343) engagée avec une partie de butée (44, 344) formée sur l'élément mobile (12, 312).

12. Dérailleur selon l'une quelconque des revendications 1 à 11, dans lequel l'élément fixe (13, 313) comprend une partie cylindrique pour une fixation par brasure (61, 361) sur le cadre de bicyclette.

13. Dérailleur selon l'une quelconque des revendications 1 à 11, dans lequel l'élément fixe (213) comprend deux parties semi-circulaires (282, 283) articulées ensemble et un élément de serrage (286) pour serrer de telles parties semi-circulaires (282, 283) autour de la partie du cadre de bicyclette.

14. Dérailleur selon la revendication 13, dans lequel l'élément fixe (213) est réalisé en une seule pièce avec l'une (283) des deux parties semi-circulaires articulées.
